# EUROPEAN PATENT SPECIFICATION

(11) **EP 3 602 903 B1**
(45) Date of publication and mention of the grant of the patent: **07.09.2022**
(21) Application number: 17822709.6
(22) Date of filing: 27.12.2017
(51) Int. Cl.: H04L 5/00, H04L 5/16, H04W 72/04, H04W 72/12

(54) **TECHNIQUE FOR CONTROLLING THE TIMING OF UPLINK CONTROL INFORMATION IN A RADIO COMMUNICATION BETWEEN A NETWORK NODE AND A RADIO DEVICE**
TECHNIK ZUR STEUERUNG DES TIMINGS VON UPLINK-STEUERUNGSINFORMATIONEN IN EINER FUNKKOMMUNIKATION ZWISCHEN EINEM NETZWERKKNOTEN UND EINER FUNKVORRICHTUNG
TECHNIQUE DE CONTRÔLE DE LA SYNCHRONISATION D'INFORMATIONS DE COMMANDE DE LIAISON MONTANTE DANS UNE COMMUNICATION RADIO ENTRE UN NOEUD DE RÉSEAU ET UN DISPOSITIF RADIO

(30) Priority: 24.03.2017 US 201762476004 P
(43) Date of publication of application: 05.02.2020
(73) Proprietor: Telefonaktiebolaget LM Ericsson (publ), 164 83 Stockholm (SE)
(72) Inventor: PARKVALL, Stefan, SE-167 57 Bromma (SE); BALDEMAIR, Robert, SE-170 69 Solna (SE)
(74) Representative: Ericsson
(86) International application number: PCT/EP2017/084644
(87) International publication number: WO 2018/171929

(56) References cited:
- EP-A1- 3 585 089
- SAMSUNG: "Resource Allocation for PUCCH", 3GPP DRAFT; R1-1702983_PUCCH RESOURCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 7 February 2017 (2017-02-07), XP051221784, Retrieved from the Internet: URL:http://www.3gpp.org/ftp/tsg_ran/WG1_RL 1/TSGR1_88/Docs/ [retrieved on 2017-02-07]
- HUAWEI ET AL: "Resource allocation of UL control channel", 3GPP DRAFT; R1-1700018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207560, Retrieved from the Internet: URL:http://www.3gpp.org/ftp/Meetings_3GPP_ SYNC/RAN1/Docs/ [retrieved on 2017-01-16]
- ERICSSON: "Design aspects of sPUCCH", 3GPP DRAFT; R1-1610329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150344, Retrieved from the Internet: URL:http://www.3gpp.org/ftp/Meetings_3GPP_ SYNC/RAN1/Docs/ [retrieved on 2016-10-09]
- ERICSSON: "On timing of uplink hybrid-ARQ acknowledgement", 3GPP DRAFT; R1-1612921 ON TIMING OF UPLINK HYBRID-ARQ ACKNOWLEDGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Reno, NV, USA; 20161114 - 20161118 4 November 2016 (2016-11-04), XP051189548, Retrieved from the Internet: URL:http://www.3gpp.org/ftp/tsg_ran/WG1_RL 1/TSGR1_87/Docs/ [retrieved on 2016-11-04]

## Description

### Technical Field

The present disclosure generally relates to a technique for controlling the timing of uplink control information in a radio communication between a network node and a radio device. More specifically, and without limitation, methods and devices are provided for controlling the timing of uplink control information in a radio communication between a network node and a radio device.

### Background

Efforts have been made to design an improved 5th generation (5G) communication system or architecture. The 5G 3GPP New Radio Access Technology (NR) is designed with dynamic time division duplex (TDD) in mind where uplink (UL) and downlink (DL) transmissions are multiplexed in the time domain, i.e. the "transmission direction" is changed at some point in time. The transmission direction in TDD is determined as part of the scheduling decisions, i.e. the scheduler in the base station determines dynamically whether uplink or downlink should be active in an upcoming slot interval. The scheduling decisions are typically communicated to the terminals by using control signaling located at the beginning of a slot, informing the terminal whether (most of) the remainder of the slot is to be used in the downlink or uplink direction. There is also a possibility to semi-statically configure the uplink-downlink allocation, meaning that the terminal knows in advance whether (parts of) a certain slot interval is to be used for downlink or uplink transmissions.

Modern wireless communication systems use re-transmission schemes, often denoted as Automatic Repeat Request (ARQ). In an ARQ scheme, the data message is appended with a CRC. The receiver decodes the data, re-calculates the CRC and compares the obtained CRC with the transmitted CRC. If the CRC matches, an acknowledgement (ACK) is sent, otherwise a negative acknowledgment (NACK) is sent. Based on the feedback the transmitter can retransmit the data. In case of a NACK, the time for successful data transmission is at least the time required for providing the feedback and to re-transmit the data, the time duration between a transmission and a re-transmission is called re-transmission round trip time.

In long term evolution (LTE) and other wireless communication systems, both forward error correction (FEC) encoding and ARQ are applied, also known as Hybrid ARQ (HARQ). To handle the uplink control information (UCI), including the hybrid-ARQ acknowledgements but also other control information such as channel-state information, NR defines one (or more) physical uplink control channel(s), PUCCH.

Several different encoding formats have been developed by 3GPP to encode different quantities and types of uplink control channel data, within the constraints of a single physical control channel resource. These several formats, known generally as PUCCH Format 1 to 5, are described in detail at pages 196-208 of the text "4G LTE/LTE-Advanced Pro and the Road to 5G," by Erik Dahlman, Stefan Parkvall, and Johan Sköld (Academic Press, Oxford UK, 2016). 5G or future communication systems may use other PUCCH formats or structures.

5G or future communication systems may enable Hybrid-ARQ acknowledgement 'immediately' after reception of downlink data, which is beneficial from a latency perspective, as well as for operation in the unlicensed spectrum. In a TDD system, 'immediate' ACK requires the channel to be switched from DL to UL. However, there are situations when an immediate ACK is not desirable despite the user equipment (UE) having the required capabilities. One example is reducing the amount of UL/DL switching; another is coexistence with other technologies such as TD-LTE.

Therefore, to allow for flexibility in e.g. terms of uplink-downlink switching, to account for different UE capabilities, and to allow for coexistence with other TDD technologies, it has been agreed at the 3GPP TSG RAN WG1 MEETING #86 and further discussed at the 3GPP TSG-RAN WG1 Meeting #87, R1-1612921, that the timing of the UCI, in particular the hybrid-ARQ acknowledgements, can be dynamically indicated by the network through, in addition to other signaling, using the DCI. According to this aspect, the DCI may contain information about the timing of the hybrid-ARQ transmitted in the uplink, e.g. by a bit indicating 'ACK in this slot' or 'ACK in later slot'. Indicating multiple timing possibilities in the DCI may require multiple bits. Either these bits can indicate predefined timing relations (same slot, next slot, next-next slot, etc.), or "polling" can be used. In the latter case, the DCI could contain a single bit indicating whether the UE should transmit the hybrid-ARQ acknowledgement (in the same slot) or not. If the UE was instructed not to transmit a hybrid-ARQ acknowledgement, the network could at a later time instant "poll" the UE for the status of the previous receptions. Polling could have the benefit of avoiding complicated HARQ-ACK codebooks as used in LTE. It can also be useful for operation in unlicensed spectrum for devices not capable of 'immediate' ACK.

3GPP draft document R1-1702983, "Resource Allocation for PUCCH", discusses several aspects of the PUCCH resource allocation, such as considering separate indication of PUCCH time resource and frequency/code-domain resource or joint indication of all resources, and proposes the dynamic switching between long and short PUCCH in addition to semi-static configuration.

3GPP draft document R1-1700018, "Resource allocation of UL control channel", discusses the designs of PUCCH resource allocation, including the indication of PUCCH type (e.g. short PUCCH or long PUCCH) and PUCCH resource index. The duration of PUCCH may be indicated to the UE semi-statically, or dynamically in an implicit/explicit way. Additionally, timing relationship between downlink data reception and corresponding acknowledgement can be semi-statically indicated and/or dynamically indicated.

3GPP draft document R1-1610329, "Design aspects of sPUCCH", presents proposals for the short PUCCH (sPUCCH) channel, such as proposing that sPUCCH formats should be defined for a specific short Transmission Time Interval (TTI) configuration and UCI content.

The document EP 3 585 089 A1 describes a resource mapping technique for UL control channels, in which a terminal device receives resource configuration information of an UL control channel including a parameter. The parameter includes sub-band information, time domain information or frequency domain information of a DCI or a DL shared channel data packet location for the terminal device, or a slot type information of the terminal device. Based on the received resource configuration information, the terminal device decides on UL control channel resources to be used for sending UCI.

However, when dynamically indicating the timing relationship between DL data reception and corresponding acknowledgement, there is a risk of inefficient signaling of the uplink timing for acknowledgements and inefficient usage of limited DCI resources.

### Summary

Accordingly, there is a need for a technique for controlling the timing of uplink control information in a radio communication between a network node and a radio device to address at least some of the problems and issues outlined above.

Alternatively or in addition, there is need for a technique for controlling the timing of uplink control information in a radio communication between a network node and a radio device to enable a more efficient usage of limited DCI resources.

According to a first general aspect, there is provided a method of controlling the timing of uplink control information (UCI) in a radio communication between a network node and a radio device according to claim 1.

As used herein, the term "timing" and/or "timing of UCI" may indicate or specify when the UCI is to be transmitted, by the radio device, on the PUCCH to the network node and/or when the UCI is to be received, by the network node, on the PUCCH from the radio device. Further, the term "timing" and/or "timing of UCI" may indicate a timing relationship between DL DCI reception and corresponding UL UCI transmission and/or between DL data reception and corresponding acknowledgement. A timing indicator relating to the timing may mean that the timing indicator may indicate a defined position in a time structure, such as an absolute instance of a time structure such as a slot identified by its slot number or a relative position in a time structure, i.e. a slot identified relative to another slot.

The timing of UCI may be determined based on the timing indicator in accordance with the scheme. Accordingly, the timing indicator may indicate, according to the scheme, a time structure or timing information, indicating when the UCI is to be transmitted by the radio device and/or received by the network node. By means of the timing indicator, the timing of the UCI, in particular the HARQ acknowledgement, can be dynamically indicated by the network using DCI.

The timing indicator may be interpreted differently in accordance with the scheme such that the timing and/or timing information associated with a timing indicator may vary in accordance with the scheme. Different interpretations of a particular timing indicator may be represented by the scheme, wherein, according to the scheme, different timings of UCI and/or timing information, indicating when the UCI is to be transmitted, may be assigned to a particular timing indicator in the DCI.

A scheme that depends on the PUCCH may take into account different characteristics of the PUCCH in order to determine which of the different interpretations shall be applied to the timing indicator in order to determine the timing and/or in order to select a timing for the UCI that allows for an efficient usage of DCI resources.

The scheme depends on the category of the PUCCH, and optionally a format of the PUCCH or a duration of the PUCCH.

The UCI timing information in the DCI indicating when the UCI, e.g. the acknowledgement, is to be transmitted may be interpreted differently for different PUCCH formats. By way of example, the scheme may assign a particular timing indicator a first timing, indicating when the UCI is to be transmitted by the radio device and/or received by the network node, if the PUCCH to be used for transmitting the UCI has a first duration and/or format and the scheme may assign the particular timing indicator a second timing if the PUCCH to be used for transmitting the UCI has a second duration and/or format different from the first duration and/or format.

This is advantageous in particular when the first timing indicates a transmission at the end of the uplink slot that correspond to the downlink slot, i.e. the "same slot" which may only possible in TDD (or half-duplex schemes in general) if a PUCCH of short duration (short PUCCH), e.g., occupying one or two Orthogonal frequency-division multiplexing (OFDM) symbols toward the end of the slot interval, is used. By means of the scheme, the same timing indicator can be interpreted differently, i.e. a later timing, e.g. later slot in the time domain, may be assigned to the same timing indicator in case of using a PUCCH of longer duration, e.g. occupying most the slot interval or even multiple slot intervals for transmitting the ICU. Inefficient signaling of the uplink timing can thus be avoided.

The UCI may include an acknowledgment for a hybrid automatic repeat request, HARQ, process of the radio communication. The "acknowledgment" may include a positive acknowledgment (ACK) or a negative ACK (NACK). The timing indicator may be indicative when (e.g., in which slot) the acknowledgment is to be sent by the radio device to the network node.

According to an aspect, at least one of size and position of the timing indicator within the DCI is independent of at least one of the PUCCH and the scheme. According to this aspect, in order to account for different characteristics of the PUCCH, such as the duration of the PUCCH, the size and/or the position of the timing indicator within the DCI are not changed but the interpretation of the timing indicator by means of the scheme. High flexibility for controlling the timing of uplink control information with low signaling overhead can thus be achieved.

The categories for the PUCCH include a short PUCCH and a long PUCCH. The short PUCCH may encompass less symbols than the long PUCCH. The radio communication may comprise multiple slots in the time domain, each slot comprising multiple symbols. The long PUCCH may encompass more than half of the symbols in one slot, i.e., may comprise more than half of the symbols of the slot. The short PUCCH may encompass less than half of the symbols in one slot.

The symbols may be OFDM symbols. The short PUCCH may comprise only one or two symbols, e.g. one or two OFDM symbols. The one or two symbols of the short PUUCH may be transmitted toward the end of a slot interval. The long PUCCH may occupy multiple slot intervals.

According to one aspect, the scheme for representing, by means of the timing indicator, the timing of the UCI on the short PUCCH may include timing the UCI in the same slot used for sending the DCI including the timing indicator.

The DCI may be sent at the beginning of the slot, e.g., including the first and/or second symbol of the slot. The UCI may be received at the end of the same slot, e.g., including the last symbol and/or penultimate symbol of the slot.

According to another aspect, the scheme for representing, by means of the timing indicator, the timing of the UCI on the long PUCCH may exclude timing the UCI in the same slot used for sending the DCI including the timing indicator.

The scheme for representing, by means of the timing indicator, the timing of the UCI on the long PUCCH may include timing the UCI in a slot subsequent to (e.g., next to) the slot used for sending the DCI including the timing indicator.

The slots for sending to the radio device and the slots for receiving from the radio device may be shifted (e.g., by a fraction of the slot interval or a fraction of a symbol interval) relative to each other (e.g., at the network node). The "same" slots may refer to a pair of one sending slot and one receiving slot that maximally overlaps with the one sending slot.

The method according to the first general aspect may further comprise or trigger the step of sending, to the radio device, DCI indicative of the PUCCH. The DCI indicative of the PUCCH may be indicative of at least one of the category of the PUCCH, the format of the PUCCH and the duration of the PUCCH. The DCI indicative of the PUCCH may be sent prior to sending the DCI including the timing indicator for timing the UCI. The radio device may select the PUCCH based on the received DCI indicative of the PUCCH.

For the radio communication, a set of formats for the long PUCCH and another set of formats for the short PUCCH may be provided. The radio communication network and/or the radio device may determine whether the short PUCCH or the long PUCCH is to be used. The radio device, e.g. the user equipment (UE), may select a PUCCH format based on the DCI indicative of the PUCCH. Alternatively or additionally, radio device may select a PUCCH format from the set depending on e.g. the type or payload size of the feedback information. Alternatively or additionally, a semi-statically configured fixed PUCCH format may be provided.

According to one aspect, the radio communication may include a time division duplex, TDD, radio communication. According to another aspect, the scheme may further depend on whether the radio communication is a TDD radio communication or a frequency division duplex, FDD, radio communication.

By way of example only, the scheme may specify that the timing or timing information associated with the timing indicator may be different for TDD compared to FDD radio communication, wherein the scheme for representing, by means of the timing indicator, the timing of the UCI on the long PUCCH for TDD radio communication may exclude timing the UCI in the same slot used for sending the DCI including the timing indicator. According to this example, the scheme for representing the timing of the UCI on the long PUCCH for FDD radio communication may include timing the UCI in the same slot used for sending the DCI including the timing indicator. In FDD, transmitting long PUCCH in the same slot may be possible if the UL slot is postponed relative to the corresponding DL slot.

According to another aspect, the scheme may further depend on whether the radio communication is a half-duplex radio communication or a full-duplex radio communication. DL transmission of a half-duplex radio communication usually ends before the slot boundary so that there may be time to send the UL UCI in the same slot, whereas DL transmission of a full-duplex radio communication may not provide enough time to send a short PUCCH at the end of the same slot. Accordingly, according to an embodiment, the scheme may specify that the timing or timing information associated with the timing indicator indicates for the UCI to be sent in a later slot for a full-duplex radio communication compared to a half-duplex radio communication.

The timing indicator may be or may include a bit field, e.g. a one bit or a two-bit field (two-bit word). The timing indicator may be selected from a set of timing indicators.

The set of timing indicators may comprise a first, second, third and fourth timing indicator, wherein, for a TDD radio communication,
- the first timing indicator may be interpreted according to the scheme that the UCI shall be received by the network node and/or transmitted by the radio device in a current slot, slot n, for short PUCCH and in the next slot, slot n+1, for long PUCCH, the current slot being the same slot used for sending the DCI,
- the second timing indicator may be interpreted according to the scheme such that the UCI shall be received by the network node and/or transmitted by the radio device in the next slot, slot n+1, for short PUCCH and in next-next slot, slot n+2 ,for long PUCCH,
- the third timing indicator may be interpreted according to the scheme such that the UCI shall be received by the network node and/or transmitted by the radio device in the next-next slot, slot n+2, for short PUCCH and in the next-next-next slot, slot n+3, for long PUCCH,
- the fourth timing indicator may be interpreted according to the scheme such that, for short PUCCH and for long PUCCH, the UCI shall be received by the network node and/or transmitted by the radio device in a future slot upon request by the network node.

In one exemplary design, a timing indicator may be provided as a two-bit field, the timing indicator may be selected from the set of timing indicators "00", "01", "10" and "11". Each of the values "00", "01", "10" and "11" would represent a timing indicator. The timing of UCI may be defined according to the scheme for short PUCCH and preferably for TDD radio communication as follows:
"00"-indicates UCI shall be transmitted in the same slot,
"01"-indicates UCI shall be transmitted in the next slot,
"10"-indicates UCI shall be transmitted in the next-next slot, and
"11"-indicates UCI shall not be transmitted until transmission of the UCI is requested at a later time instant by the network node.

The timing of UCI may be defined according to the scheme for long PUCCH and preferably for TDD radio communication as follows:
"00"-indicates UCI shall be transmitted in the next slot,
"01"-indicates UCI shall be transmitted in the next-next slot,
"10"-indicates UCI shall be transmitted in the next-next-next slot, and
"11"-indicates UCI shall not be transmitted until transmission of the UCI is requested at a later time instant by the network node.

The selection of the timing indicator from the set of indicators may be based on scheduling information. The scheduling information may comprise at least one of: MIMO stream, Number of MIMO streams, transport block size of a data packet, retransmission buffer size, available resource blocks of the communication link, Frequency Bandwidth of the communication link, Frequency Bandwidth of the scheduled transmission, Channel coding configuration of the transmission, Traffic Type.

According to another aspect, the scheme may further depend on whether an uplink/downlink allocation for the radio communication between the network node und the radio device is a semi-statically configured uplink/downlink allocation.

By way of example, the timing indicator may indicate to transmit the UCI in the same slot used for sending the DCI including the time indicator. Transmitting an UCI, e.g. an ACK, in the uplink at the end of a slot interval does not make sense in case the slot had been semi-statically configured as a downlink slot. In this case, the timing information associated with the different timing indicators "00", "01", "10", "11" as described above may be reinterpreted according to the scheme as 'first uplink occasion', 'second uplink occasion', 'third uplink occasion' etc. instead of meaning e.g. 'same slot', 'next slot', 'next-next slot'.

According to another variant of this aspect, the scheme may assign different timings for short and long PUCCH depending on how long an uplink occasion is, wherein only sufficiently long uplink intervals are counted in the interpretation of the timing information for long PUCCH.

According to another aspect, the scheme may further depend on the duplex capabilities of at least one of the radio device and the network node.

According to one aspect, the method according to the first general aspect may further comprise or trigger the step of sending data to the radio device using the HARQ process. The data may be sent to the radio device after sending the DCI comprising the timing indicator. The data may be sent to the radio device before receiving the UCI from the radio device.

The method may be performed by, or by means of, the network node. The network node may be any device configured for radio communication with the radio device over a communication link, wherein the network node transmits DCI to the radio device and receives UCI on a PUCCH from the radio device.

The network node may be embodied by a base station, an eNodeB in LTE, a gNodeB in New Radio (NR) or a relay node or any station defined above in the context of the method aspect according to the first general aspect.

The technique may be embodied in a communication network compatible with 3rd Generation Partnership Project (3GPP) Long Term Evolution (LTE), LTE-Advanced (e.g., 3GPP LTE Release 10, LTE Advanced Pro (e.g. 3GPP LTE Release 13) or 3GPP New Radio (NR) for the 5th Generation (5G).

According to a second general aspect, there is provided a method of controlling the timing of uplink control information, UCI, in a radio communication between a network node and a radio device according to claim 11.

Embodiments of the method according to the second general aspect may include one or more of the following aspects and/or features.

According to one aspect, the method may comprise or trigger the step of receiving, from the network node, DCI indicative of the PUCCH.

According to a further aspect, the method may comprise or trigger the step of receiving data from the network node using the HARQ process.

According to a further aspect, the data may be received from the network node after having received the DCI comprising the timing indicator.

According to a further aspect, the data may be received from the network node before sending the UCI to the network node.

The method may be performed by, or by means of, a radio device. The radio device may be any device configured for radio communication with the network node over a communication link, wherein the radio device receives DCI from the network node and transmits UCI on a PUCCH to the network node related to the received DL data.

The radio device may be embodied by a user equipment, a machine type device, a terminal or any station defined above in the context of the method aspect according to the second general aspect.

The method according to the second general aspect may further comprise any feature and aspects and/or achieve any advantage disclosed in the context of the method according to the first general aspect and/or may comprise one or more steps corresponding to any of the steps of the method according to the first general aspect.

According to another aspect, a computer program product is provided according to claim 13.

As to one device aspect, a device for controlling the timing of uplink control information, UCI, in a radio communication between the device and a radio device is provided according to claim 14.

As to another device aspect, a device for controlling the timing of uplink control information, UCI, in a radio communication between a network node and the device is provided according to claim 16.

The devices and/or the stations may further include any feature disclosed in the context of the method aspects. Particularly, any one of the units and modules, or a further unit or module, may be configured to perform or initiate one or more of the steps of any one of the method aspects.

Some of the advantages achieved by the methods and the corresponding radio network nodes and radio devices may be compiled as enabling efficient signaling of uplink timing for UCI, in particular for acknowledgements and enabling efficient usage of limited DCI resources.

### Brief Description of the Drawings

Further details of the technique are described with reference to the enclosed drawings, wherein:
- Fig. 1: shows a schematic block diagram of a device for controlling the timing of uplink control information, UCI, in a radio communication between the device and a radio device;
- Fig. 2: shows a schematic block diagram of a device for controlling the timing of uplink control information, UCI, in a radio communication between a network node and the device;
- Fig. 3: shows a flowchart for a method of controlling the timing of uplink control information, UCI, in a radio communication between a network node and a radio device, which is implementable by the device of Fig. 1;
- Fig. 4: shows a flowchart for a method of controlling the timing of uplink control information, UCI, in a radio communication between a network node and a radio device, which is implementable by the device of Fig. 2;
- Fig. 5: illustrates an exemplary communication system in which embodiments herein may be applied and/or implemented;
- Fig. 6: illustrates an example of a short PUCCH and of a long PUCCH for a 5G NR system;
- Fig. 7: illustrates an example of how timing of UCI is controlled based on a timing indicator;
- Fig. 8: illustrates an example of a scheme for interpreting a timing indicator dependent on the PUCCH;
- Fig. 9: illustrates another example of a scheme for interpreting a timing indicator dependent on the PUCCH;
- Fig. 10: shows a schematic block diagram of an embodiment of a device for performing the method of Fig. 3; and
- Fig. 11: shows a schematic block diagram of an embodiment of a device for performing the method of Fig. 4.

### Detailed Description

Reference now should be made to the drawings, in which the same reference numerals are used throughout the different drawings to designate the same or similar components.

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details.

While terminologies from 3GPP LTE and NR have been used to exemplify a possible implementation, this should not be seen as limiting the scope of the invention to only the aforementioned system. Other wireless systems may also benefit from exploiting the ideas covered within this disclosure. Moreover, while the following embodiments are primarily described for a 5G New Radio RAN implementation, it is readily apparent that the technique described herein may also be implemented in any other radio network, including Long Term Evolution (LTE) or a successor thereof.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general-purpose computer, e.g. including an Advanced RISC Machine (ARM). It will also be appreciated that, while the following embodiments are primarily described in context with methods and devices, the invention may also be embodied in a computer program product as well as in a system comprising a computer processor and memory coupled to the processor, wherein the memory is encoded with one or more programs that may perform the functions and steps or implement the units and modules disclosed herein.

The following embodiments are not mutually exclusive. Components from one embodiment may be tacitly assumed to be present in another embodiment and it will be obvious to a person skilled in the art how those components may be used in the other exemplary embodiments.

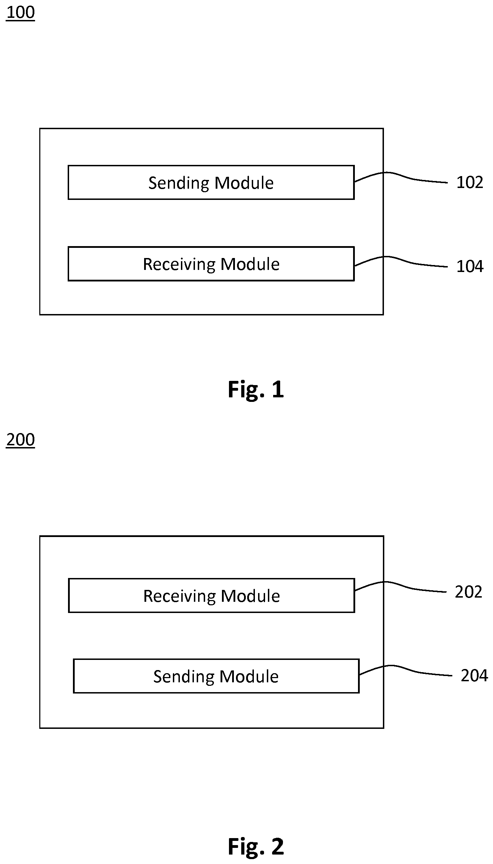

Fig. 1 shows a schematic block diagram of a device 100 for controlling the timing of uplink control information, UCI, in a radio communication between the device and a radio device 200, as shown in Fig. 2. The device 100 comprises a sending module 102 for sending, to the radio device 200, downlink control information, DCI, including a timing indicator for timing uplink control information, UCI, on a physical uplink control channel, PUCCH, wherein the timing is represented by the timing indicator according to a scheme that depends on the PUCCH. The device further comprises a receiving module 104 for receiving, from the radio device 200, the UCI on the PUCCH according to the timing.

The device 100 may be connected to and/or part of a radio network, preferably a 5G NR network. The device 100 may be any network node or device configured for radio communication with the radio device over a communication link, wherein the device 100 is configured to transmit DCI to the radio device and to receive UCI on a PUCCH from the radio device.

The device 100 may be embodied by or at a transmitting station of the radio network, nodes connected to the radio network for controlling the transmitting station or a combination thereof. For example, the device 100 may be a base station or a gNodeB.

Fig. 2 shows a schematic block diagram of a device 200 for controlling the timing of UCI in a radio communication between a device (network node) 100 and the device 200. The device 200 comprises a receiving module 202 for receiving, from the network node 100, DCI including a timing indicator for timing UCI on a PUCCH, wherein the timing is represented by the timing indicator according to a scheme that depends on the PUCCH. The device 200 further comprises a sending module 204 for sending, to the device (network node) 100, the UCI on the PUCCH according to the timing.

The device 200 may be any device configured for radio communication with the network node over a communication link, wherein the radio device receives DCI from the network node and transmits UCI on a PUCCH to the network node related to the received DL data.

Any of the modules of the device 100 and the device 200 may be implemented by units configured to provide the corresponding functionality.

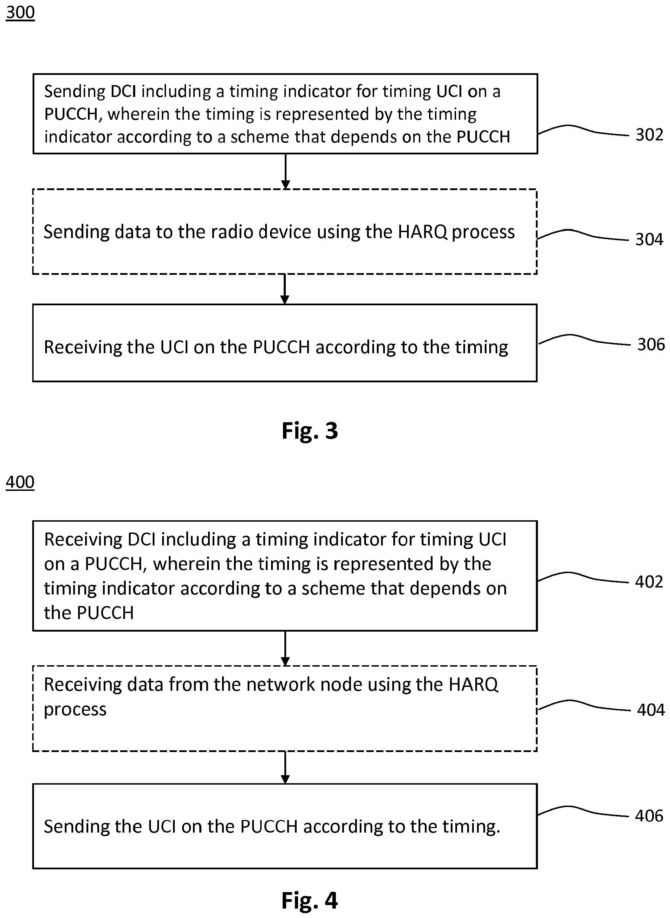

Fig. 3 shows a flowchart for a method of controlling the timing of uplink control information, UCI, in a radio communication between a network node and a radio device method. The method 300 comprises a step of sending 302 to the radio device, DCI including a timing indicator for timing UCI on a PUCCH. The timing is represented by the timing indicator according to a scheme that depends on the PUCCH.

The method further comprises a step of receiving 306, from the radio device, the UCI on the PUCCH according to the timing.

Optionally, the method 300 may comprise sending, to the radio device, DCI indicative of the PUCCH. The DCI indicative of the PUCCH may be sent in step 302 together with the DCI including the timing indicator. The DCI indicative of the PUCCH may be indicative of at least one of the category of the PUCCH, the format of the PUCCH and the duration of the PUCCH. The DCI indicative of the PUCCH may be sent prior to sending the DCI including the timing indicator for timing the UCI. The radio device may select the PUCCH based on the received DCI indicative of the PUCCH.

The method 300 may further comprise a step of sending 304 data to the radio device using the HARQ process, wherein the data may be sent to the radio device after sending the DCI comprising the timing indicator.

The method 300 may be performed by the device 100, e.g. For example, the module 102 may perform the steps 302 and 304 and the module 104 may perform the step 306.

Fig. 4 shows a flowchart for a method of controlling the timing of UCI in a radio communication between a network node and a radio device. The method 400 comprises a step of receiving 402, from the network node, DCI, including a timing indicator for timing UCI on a PUCCH. As noted above, the timing is represented by the timing indicator according to a scheme that depends on the PUCCH.

The method 400 further comprises a step of sending 406, to the network node, the UCI on the PUCCH according to the timing.

Optionally, the method 400 may comprise receiving, from the network node, DCI indicative of the PUCCH. The method 400 may further comprise a step 404 receiving 404 data from the network node using the HARQ process.

The method 400 may be performed by the device 200. For example, the module 202 may perform the steps 402 and 404 and the module 204 may perform the step 406.

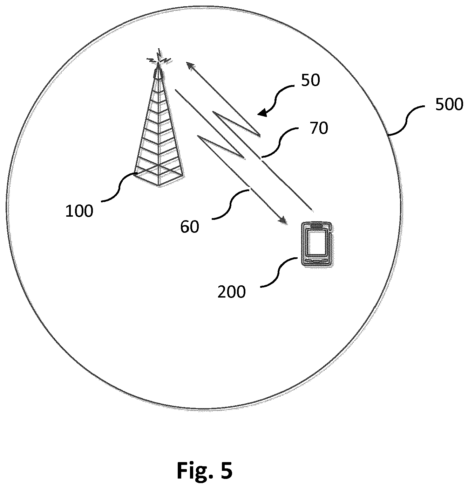

Fig. 5 illustrates an exemplary communication system 500 wherein embodiments herein may be employed or applied, comprising a first communication device 100, e.g. as shown Fig. 1, and a second communication device 200, e.g. as shown in Fig. 2. The communication devices 100, 200 are communicating over a communication link, 50 supporting a retransmission scheme. A communication link may comprise a downlink, DL, 60 and an uplink, UL, 70. For the sake of simplicity, the communication device 100 may be a base station and will have the role of a transmitting device, whereas the communication device 200 may be a UE, which will have the role of a receiving device in relation to the retransmission scheme. The communication system may be 5G NR communication system 500.

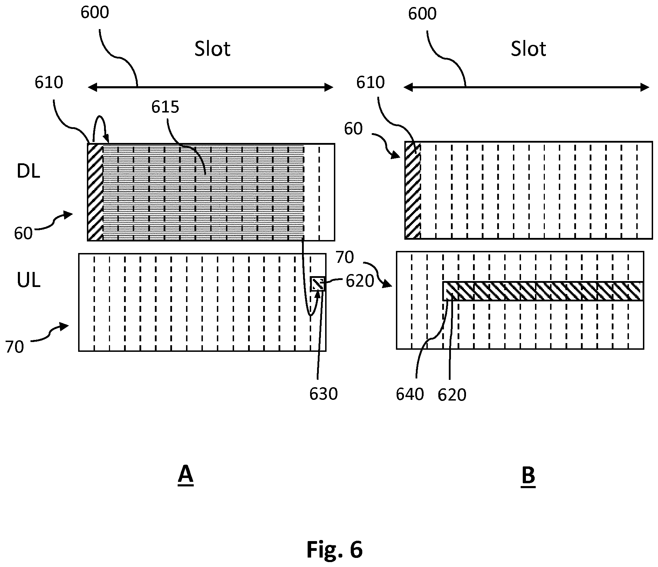

Fig. 6 illustrates an example of a short PUCCH and of a long PUCCH for a 5G NR system and shows an example TDD slot 600 structure in a 5G NR communication system to illustrate the difference between a short PUCCH and a long PUCCH.

A part of an UL- and/or DL slot may e.g. be a symbol, e.g. an OFDM symbol. A symbol may be a shorter time structure than a slot. A shorter time structure means that the time length of a symbol is shorter than for a slot. Whether a slot in this application is defined as an DL slot 60 or UL slot 70, may be determined in relation to the content of the slot. A DL slot 60 may be a slot that is transmitted by a transmitting device, wherein the slot comprises data packets and DCI. An UL slot 70 may be a slot that is transmitted from the receiving device 200 to the transmitting device 100 wherein the slot comprises UCI related to data packets which have been transmitted in a DL slot by the transmitting device.

To handle the uplink control information (UCI), including the hybrid-ARQ acknowledgements but also other control information such as channel-state information, NR defines one (or more) physical uplink control channel(s), PUCCH. The formats, or structures, of this channel(s) can be divided into two categories:
a first category, herein referred to as "short PUCCH; and
a second category, herein referred to as "long PUCCH",
A short PUCCH 630 may encompass less than half of the symbols in one slot 600. The short PUCCH according to this example is a PUCCH that occupies only e.g. 1-2 OFDM symbols towards the end of a slot interval. This is illustrated in part A of Fig. 6.

A long PUCCH 640 may encompass more than half of the symbols in one slot 600. A long PUCCH may occupy most of the slot interval or even multiple slot intervals. This is illustrated in part B of Fig. 6. One reason for the long PUCCH is to provide better coverage and/or a large UCI payload.

For the slot 600, the corresponding DL slot 60 and UL slot 70 are shown. The short PUCCH 630 and the long PUCCH 640 comprise the UCI transmitted UL from the radio device 200 to the base station 100. The radio communication comprises multiple slots 600 in the time domain, each slot 600 comprising multiple symbols.

Referring to part A of Fig. 6 again, there is illustrated the DL transmission of DCI 610 by the base station 100 at the beginning of the slot 600 to the radio device 200, followed by sending data 615 to the radio device using the HARQ process. The Down-Link (DL) transmission has to stop some time before the Up-Link (UL) transmission to enable the receivers to switch from transmit to receive and vice versa. This time, from stopping the DL transmission until UL transmission starts, may be called a guard period.

Since the short PUCCH according to this example occupies only 1-2 OFDM symbols towards the end of a slot interval, the UCI 620 comprising the HARQ acknowledgement can be sent at the end of the slot 600 using the short PUCCH 630, in which the corresponding data is transmitted, as shown in part A of Fig. 6.

Referring to part B of Fig. 6 again, there is illustrated the long PUCCH 640 comprising the UCI 620, wherein the long PUCCH (640) encompasses more than half of the symbols in one slot 600. It is therefore not possible to transmit DL data 615 and UCI on the long PUCCH in the same slot interval.

There may be a set of formats for the long PUCCH and another set of formats for the short PUCCH with the radio device (UE) 200 picking a format from the set depending on e.g. the type or payload size of the feedback information.

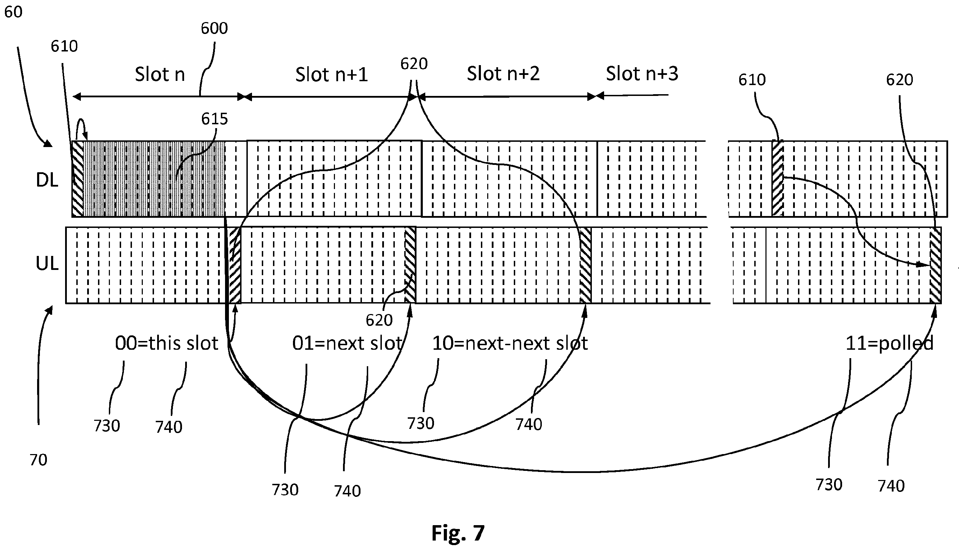

Fig. 7 illustrates an example of how timing of UCI is controlled based on a timing indicator. As already mentioned, it has been agreed at the 3GPP TSG RAN WG1 MEETING #86 and further discussed at the 3GPP TSG-RAN WG1 Meeting #87, R1-1612921, that the timing of the UCI, in particular the hybrid-ARQ acknowledgements, can be dynamically indicated by the network through, in addition to other signaling, using the DCI. Dynamically indicating the timing relationship between the DL data reception and corresponding acknowledgement allows for flexibility in e.g. terms of uplink-downlink switching, to account for different UE capabilities, and to allow for coexistence with other TDD technologies.

According to this aspect, the DCI 610 contains information about the timing of the hybrid-ARQ transmitted in the uplink 70, herein referred to as timing indicator 730, e.g. by a bit indicating 'ACK in this slot' or 'ACK in later slot'. For indicating multiple timing possibilities, the timing indicator may be a two-bit field, as shown in Fig. 7. Either these bits can indicate predefined timing relations (same slot, next slot, next-next slot, etc.), or "polling" can be used. In the latter case, the DCI could contain a single bit indicating whether the radio device should transmit the hybrid-ARQ acknowledgement (in the same slot) or not. If the radio device 200, e.g. an UE, was instructed not to transmit a hybrid-ARQ acknowledgement, the network node could at a later time instant "poll" the radio device for the status of the previous receptions. Polling could have the benefit of avoiding complicated HARQ-ACK codebooks as used in LTE. It can also be useful for operation in unlicensed spectrum for devices not capable of 'immediate' ACK.

Fig. 7 shows an exemplary design to illustrate how UCI timing can be indicated dynamically. Four consecutive slots 600 in the time domain are shown. The current slot is denoted as slot n, the next slot as slot n+1, the next-next slot as slot n+2 and the next-next-next slot as slot n+3. The timing indicator 730 may be provided as a two-bit field. The timing indicator may be selected from the set of timing indicators "00", "01", "10" and "11". Each of the values "00", "01", "10" and "11" represents a different timing indicator. The timing 740 for UCI may be defined as follows:
"00"-indicates UCI shall be transmitted by the radio device/received by the network node in the same slot,
"01"-indicates UCI shall be transmitted by the radio device/received by the network node in the next slot,
"10"-indicates UCI shall be by the radio device/received by the network node in the next-next slot, and
"11"-indicates UCI shall not be transmitted by the radio device until transmission of the UCI is requested at a later time instant by the network node ("polled").

Fig. 7 shows the resulting transmissions of the UCI 620 using the short PUCCH for all of the above four timing indicators 730. Using the table in Fig. 7 as an example, the code word "00" would mean that UCI is required in the same slot n. Thus, the corresponding DL data transmission 615 needs to be finished before the end of the slot n interval, as shown in Fig. 7. A timing indicator "01", on the other hand, would mean that the full slot can be used for data transmission as the feedback is not supposed to come until the next consecutive slot n+1.

Receiving UCI 620 in the same slot (slot n) may mean that the UCI 620 is received, by a network node 100, in an UL slot 70 corresponding to the DL slot 60 comprising a data packet to which the UCI 620 relates. Receiving UCI 620 in the next slot (slot n+1) may mean that the UCI 620 is received, by the network node, before the next DL slot (slot n+1) has timed out and/or that the UCI 620 is transmitted by the radio device 200 before the next DL slot (slot n+1) has ended. Receiving UCI 620 in the next-next slot (slot n+2) may mean that the UCI 620 is received, by a transmitting network node 100, in an UL slot corresponding to the next-next DL slot comprising a data packet to which the retransmission feedback relates. Next slot and next-next slot are related to the current slot, which may be the slot in which the timing Indicator 730 is transmitted from the network node 100 as part of the DCI 610. I.e. the next slot may be the next sequential and/or the next adjacent, in time, slot in a series of slot.

Hybrid ARQ acknowledgements for downlink transmissions in slot n can be transmitted at the end of the uplink slot n (i.e. the "same slot") if the short PUCCH is used. However, this is not possible if the long PUCCH is used as an uplink transmission cannot overlap reception of downlink data in TDD (or half-duplex schemes in general), neither can the hybrid-ARQ acknowledgement (or uplink control signaling in general) be transmitted prior to the end of reception of the downlink data. This would render the 'ACK in same slot' signaling in the DCI (combination "00" in the example above) useless for the long PUCCH and inefficient signaling of the uplink timing for acknowledgements on the long PUCCH, at least for half-duplex schemes such as TDD.

Therefore, by means of a scheme, the UCI timing information 740 in the DCI, indicating when the UCI 620 and in particular the acknowledgement is to be transmitted, is interpreted differently dependent on the PUCCH, e.g. is interpreted differently for different PUCCH formats, and optionally also for different duplex capabilities, such as half-duplex vs. full-duplex or FDD vs. TDD radio communication..

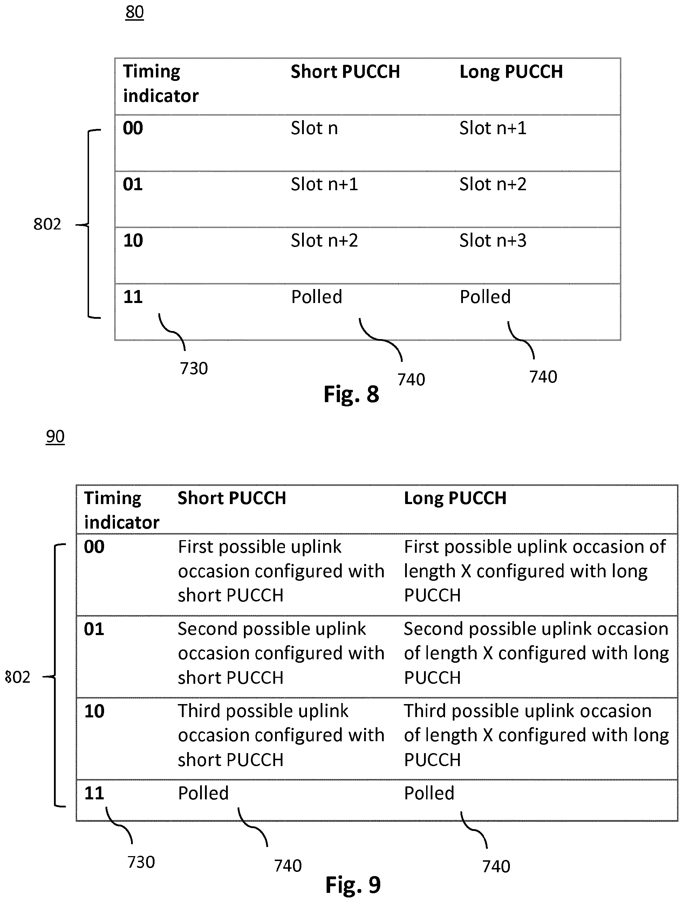

Fig. 8 illustrates an example of a scheme 80 for interpreting a timing indicator dependent on the PUCCH as part of the invention. By means of the scheme 80, the UCI timing indicator 730 in the DCI, indicating when the UCI and in particular the acknowledgement is to be transmitted, is interpreted differently for different PUCCH formats, e.g. short PUCCH and long PUCCH.

Briefly described, a solution is provided to ensure that the timing as indicated by the timing indicator can be realized in view of the PUCCH used for transmitting the UCI. According to the provided solution, the timing indicator 730 in the DCI that indicates when the UCI and the acknowledgement is to be transmitted, is interpreted differently for different PUCCH formats, e.g. short and long PUCCH.

In this example, the timing indicator 730 is provided as a two-bit field and may be selected from the set 802 of timing indicators "00", "01", "10" and "11".

The timing 740 for UCI is defined according to the scheme for short PUCCH and preferably for TDD radio communication as follows and as also shown in Fig. 8:
"00"-indicates UCI shall be transmitted by the radio device/received by the network node in the same slot (slot n),
"01"-indicates UCI shall be transmitted by the radio device/received by the network node in the next slot (slot n+1),
"10"-indicates UCI shall be transmitted by the radio device/received by the network node in the next-next slot (slot n+2), and
"11"-indicates UCI shall not be transmitted until transmission of the UCI is requested at a later time instant by the network node ("polled").

However, for long PUCCH and preferably for TDD radio communication, the timing of UCI is defined according to the scheme for long PUCCH and preferably for TDD radio communication as follows:
"00"-indicates UCI shall be transmitted by the radio device/received by the network node in the next slot (slot n+1),
"01"-indicates UCI shall be transmitted by the radio device/received by the network node in the next-next slot (slot n+2),
"10"-indicates UCI shall be transmitted by the radio device/received by the network node in the next-next-next slot (slot n+3), and
"11"-indicates UCI shall not be transmitted until transmission of the UCI is requested at a later time instant by the network node.

However, it shall be noted that the timing indicator and the scheme are not restricted to the mentioned UL slots, but any suitable future UL slot may be indicated.

Thus, the timing of the UCI is controlled not only based on the timing indicator 730 but also in accordance with the scheme 80 that may interpret the timing indicator 730 differently and assign a different timing 740 to the same timing indicator 730 depending on the PUCCH format. Both the base station 100 and the radio device 200 comprise the scheme so that the same timing is determined at the transmitting side and the receiving side of the UCI 620. When the base station 200 transmits the timing indicator 730 with the DCI at the beginning of slot n, both the base station 100 and the radio device 200 will determine the timing for the UCI based on the scheme 80 and the timing indicator 730.

For example, when the base station 200 transmits the timing indicator "00" with the DCI at the beginning of slot n, the radio device 200 will send the UCI 620 with the acknowledgement of the data transfer 615 at the end of the same slot (slot n) if a short PUCCH is to be used for transmitting the UCI. By contrast, when the base station 200 transmits the timing indicator "00" with the DCI at the beginning of slot n, the radio device 200 will send the UCI with the acknowledgement of the data transfer 615 at the end of the next slot (slot n+1) if a long PUCCH is to be used.

Fig. 9 illustrates another example of a scheme 90 for interpreting a timing indicator dependent on the PUCCH.

According to this example, the scheme is applied in case of a semi-statically configured uplink/downlink allocation configured in the radio device 200. For example, transmitting a ACK in the uplink at the end of a slot interval as shown in part A of Fig. 6 is not possible in case the slot had been semi-statically configured as a downlink slot. In this case, the different timing indicators 730 can be reinterpreted as 'first uplink occasion', 'second uplink occasion', etc. instead of meaning e.g., 'same slot', 'next slot', 'next-next slot'. This is illustrated in the left column of the table representing the scheme 90 in Fig. 9.

Additionally, the scheme 90 makes a difference between short PUCCH and long PUCCH depending on how long an uplink occasion is. The scheme in the left column of the table of Fig. 9 is applied for short PUCCH, whereas the right column of the table of Fig. 9 is applied for long PUCCH. In particular, only sufficiently long uplink intervals are counted in the interpretation of the timing information for long PUCCH. An example is given the right column of the table shown in Fig. 9, where X denotes the length of an uplink occasion wherein X is chosen such that it X is equal or greater than a threshold time required to transmit long PUCCH.

Accordingly, the timing information associated with the different timing indicators "00", "01", "10", "11" as described above may be reinterpreted according to the scheme 90 as 'first uplink occasion configured with short PUCCH', 'second uplink occasion configured with short PUCCH', 'third uplink occasion configured with short PUCCH' and 'Polled ', respectively instead of meaning e.g. 'same slot', 'next slot', 'next-next slot' or 'polled '.

Accordingly, the timing information associated with the different timing indicators "00", "01", "10", "11" as described above may be reinterpreted according to the scheme 90 as 'first uplink occasion of length X configured with long PUCCH', 'second uplink occasion of length X configured with long PUCCH', 'third uplink occasion of length X configured with long PUCCH' and 'Polled ', respectively instead of meaning e.g. 'same slot', 'next slot', 'next-next slot' or'polled'.

The schemes 80 and 90 may also be combined into one scheme for interpreting the timing indicator.

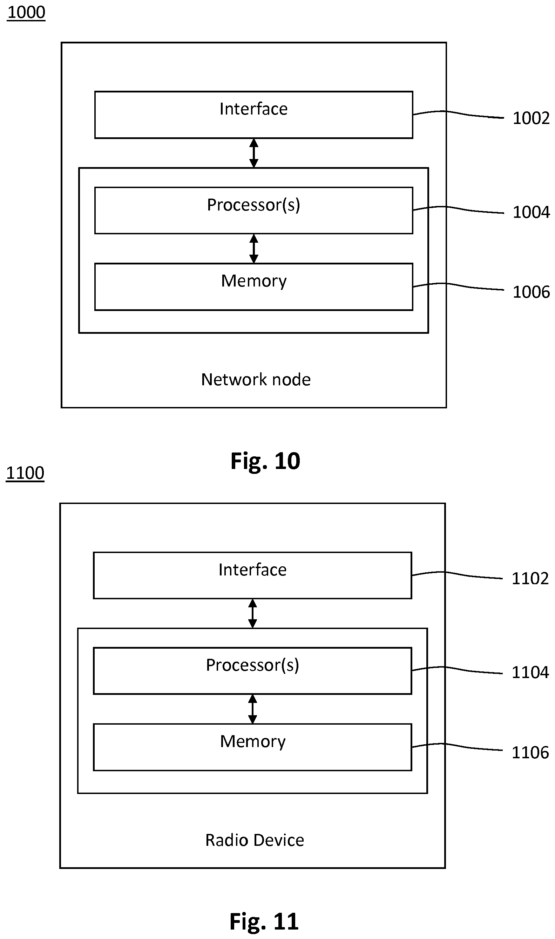

Fig. 10 shows a schematic block diagram for an embodiment of a first device 1000. The first device 1000 (network node) may comprises a radio interface 1002 for radio communication with at least a second device 1100, one or more processor circuits 1004 for performing the method 300 and memory 1006 coupled to the processor circuits 1004. The memory 1006 is encoded with instructions that implement each of the modules 102 and 104.

The one or more processor circuits 1004 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other station components, such as the memory 1006, station functionality. For example, the one or more processor circuits 1004 may execute instructions stored in the memory 1006. Such functionality may include providing various features and steps discussed herein, including any of the benefits disclosed herein.

Fig. 11 shows a schematic block diagram for an embodiment of a second device 1100. The second device 1100 comprises a radio interface 1102 for radio communication with at least a first device, one or more processor circuits 1104 for performing the method 400 and memory 1106 coupled to the processor circuits 1104. The memory 1106 is encoded with instructions that implement each of the modules 202 and 204.

The one or more processor circuits 1104 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other station components, such as the memory 1106, station functionality. For example, the one or more processor circuits 1104 may execute instructions stored in the memory 1106. Such functionality may include providing various features and steps discussed herein, including any of the benefits disclosed herein.

As has become apparent from above description of exemplary embodiments, the technique can reduce control signaling. The technique can be embodied to distinguish between persistent and rapidly changing control parameters, and/or to distinguish between supported and unsupported control parameters.

Embodiments reduce an amount of radio resources needed for the transmission of downlink control information. For example, the amount of radio resources for control signaling are halved. Furthermore, e.g., at the same time, embodiments allow for more detailed control information.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (300) of controlling the timing of uplink control information, UCI, in a radio communication (50) between a network node (100; 1000) and a radio device (200; 1100), the method performed by the network node and comprising or triggering:
sending (302), to the radio device, downlink control information, DCI, (610) including a timing indicator (730) for timing uplink control information, UCI, (620) on a physical uplink control channel, PUCCH, (630, 640) wherein the timing (740) is represented by the timing indicator (730) according to a scheme (80, 90) that depends on the PUCCH (630, 640), and wherein a size of the timing indicator (730) within the DCI (610) is independent of the PUCCH (630, 640), wherein the scheme (80, 90) depends on a category of the PUCCH, wherein the category for the PUCCH includes a short PUCCH (630) and a long PUCCH (640), and wherein the timing indicator (730) is interpreted differently in accordance with the scheme such that the timing (740) associated with the timing indicator (730) varies in accordance with the scheme; and
receiving (306), from the radio device (200; 1100), the UCI (620) on the PUCCH (630, 640) according to the timing (740).

2. The method (300) of claim 1, wherein the size of the timing indicator within the DCI (610) is independent of the scheme (80, 90), and/or wherein a position of the timing indicator within the DCI (610) is independent of at least one of the PUCCH (630, 640) and the scheme (80, 90).

3. The method (300) of claim 1 or 2, wherein the scheme (80, 90) further depends on at least one of a format of the PUCCH and a duration of the PUCCH.

4. The method (300) of any one of claims 1 to 3, wherein the radio communication comprises multiple slots (600) in the time domain, each slot (600) comprising multiple symbols, and wherein the long PUCCH (640) encompasses more than half of the symbols in one slot (600), and/or the short PUCCH (630) encompasses less than half of the symbols in one slot (600).

5. The method (300) of any one of claims 1 to 4, wherein the scheme (80) for representing, by means of the timing indicator (730), the timing (740) of the UCI (620) on the short PUCCH (630) includes timing the UCI in the same slot used for sending the DCI (610) including the timing indicator, and/or, wherein the scheme (80) for representing, by means of the timing indicator (730), the timing (740) of the UCI (620) on the long PUCCH (640) excludes timing the UCI (620) in the same slot used for sending the DCI (610) including the timing indicator.

6. The method (300) of any one of claims 1 to 5, further comprising:
sending, to the radio device, DCI indicative of the PUCCH.

7. The method (300) of any one of claims 1 to 6, wherein the radio communication includes a time division duplex, TDD, radio communication, and/or, wherein the scheme further depends on whether the radio communication is a half-duplex radio communication or a full-duplex radio communication, and/or, wherein the scheme further depends on whether an uplink/downlink allocation for the radio communication between the network node and the radio device is a semi-statically configured uplink/downlink allocation.

8. The method (300) of any one of claims 1 to 7, wherein the UCI includes an acknowledgment for a hybrid automatic repeat request, HARQ, process of the radio communication.

9. The method (300) of claim 8, further comprising or triggering:
sending (304) data to the radio device using the HARQ process, optionally wherein the data is sent to the radio device after sending the DCI comprising the timing indicator.

10. The method of claim 9, wherein the data is sent to the radio device before receiving the UCI from the radio device.

11. A method (400) of controlling the timing of uplink control information, UCI, (620) in a radio communication (50) between a network node (100; 1000) and a radio device (200; 1100), the method performed by the radio device and comprising or triggering:
receiving (402), from the network node, downlink control information, DCI, (610) including a timing indicator (730) for timing uplink control information, UCI, (620) on a physical uplink control channel, PUCCH, (630, 640) wherein the timing (740) is represented by the timing indicator (730) according to a scheme (80, 90) that depends on the PUCCH (630, 640), and wherein a size of the timing indicator (730) within the DCI (610) is independent of the PUCCH (630, 640), wherein the scheme (80, 90) depends on a category of the PUCCH, wherein the category for the PUCCH includes a short PUCCH (630) and a long PUCCH (640), and wherein the timing indicator (730) is interpreted differently in accordance with the scheme such that the timing (740) associated with the timing indicator (730) varies in accordance with the scheme; and
sending (406), to the network node (100; 1000), the UCI (620) on the PUCCH (630, 640) according to the timing (740).

12. The method of claim 11, further comprising any feature or step corresponding to any one of claims 2 to 10.

13. A computer program product comprising program code portions which, when executed on one or more computing devices (1004; 1104), cause the one or more computing devices (1004; 1104) to carry out the method of any one of the claims 1 to 12; and, optionally, the computer program product is stored on a computer-readable recording medium (1006; 1106).

14. A network node (100) for controlling the timing of uplink control information, UCI, in a radio communication between the network node (100) and a radio device (200), the network node (100) being configured to perform or trigger the steps of:
sending, to the radio device (200), downlink control information, DCI, (610) including a timing indicator (730) for timing uplink control information, UCI, (620) on a physical uplink control channel, PUCCH, (630, 640) wherein the timing (740) is represented by the timing indicator (730) according to a scheme (80, 90) that depends on the PUCCH (630, 640), and wherein a size of the timing indicator (730) within the DCI (610) is independent of the PUCCH (630, 640), wherein the scheme (80, 90) depends on a category of the PUCCH, wherein the category for the PUCCH includes a short PUCCH (630) and a long PUCCH (640), and wherein the timing indicator (730) is interpreted differently in accordance with the scheme such that the timing (740) associated with the timing indicator (730) varies in accordance with the scheme; and
receiving, from the radio device (200), the UCI (620) on the PUCCH (630, 640) according to the timing (740).

15. The network node (100) of claim 14, further configured to perform the steps of any one of claims 2 to 10.

16. A radio device (200) for controlling the timing of uplink control information, UCI, in a radio communication between a network node (100) and the radio device (200), the radio device (200) being configured to perform or trigger the steps of:
receiving, from the network node (100), downlink control information, DCI, (610) including a timing indicator (730) for timing uplink control information, UCI, (620) on a physical uplink control channel, PUCCH, (630, 640) wherein the timing (740) is represented by the timing indicator (730) according to a scheme (80, 90) that depends on the PUCCH (630, 640), and wherein a size of the timing indicator (730) within the DCI (610) is independent of the PUCCH (630, 640), wherein the scheme (80, 90) depends on a category of the PUCCH, wherein the category for the PUCCH includes a short PUCCH (630) and a long PUCCH (640), and wherein the timing indicator (730) is interpreted differently in accordance with the scheme such that the timing (740) associated with the timing indicator (730) varies in accordance with the scheme; and
sending, to the network node (100), the UCI (620) on the PUCCH (630, 640) according to the timing (740).

17. The radio device (200) of claim 16, further configured to perform the steps corresponding to any one of claims 2 to 10.

## Patentansprüche

1. Verfahren (300) zur Steuerung der Taktung von Uplink-Steuerinformationen, UCI, in einer Funkkommunikation (50) zwischen einem Netzwerkknoten (100; 1000) und einer Funkvorrichtung (200; 1100), wobei das Verfahren vom Netzwerkknoten durchgeführt wird und umfasst oder auslöst:
Senden (302) von Downlink-Steuerinformationen, DCI, (610), die einen Taktindikator (730) zur Taktung von Uplink-Steuerinformationen, UCI, (620) auf einem physikalischen Uplink-Steuerkanal, PUCCH, (630, 640) umfassen, an die Funkvorrichtung, wobei die Taktung (740) durch den Taktindikator (730) gemäß einem Schema (80, 90) dargestellt wird, das vom PUCCH (630, 640) abhängt, und wobei eine Größe des Taktindikators (730) innerhalb der DCI (610) vom PUCCH (630, 640) unabhängig ist, wobei das Schema (80, 90) von einer Kategorie des PUCCH abhängt, wobei die Kategorie für den PUCCH einen kurzen PUCCH (630) und einen langen PUCCH (640) umfasst, und wobei der Taktindikator (730) gemäß dem Schema unterschiedlich interpretiert wird, derart dass die mit dem Taktindikator (730) assoziierte Taktung (740) gemäß dem Schema variiert; und
Empfangen (306) der UCI (620) auf dem PUCCH (630, 640) von der Funkvorrichtung (200; 1100) gemäß der Taktung (740) .

2. Verfahren (300) nach Anspruch 1, wobei die Größe des Taktindikators innerhalb der DCI (610) vom Schema (80, 90) unabhängig ist, und/oder wobei eine Position des Taktindikators innerhalb der DCI (610) von mindestens einem des PUCCH (630, 640) und des Schemas (80, 90) unabhängig ist.

3. Verfahren (300) nach Anspruch 1 oder 2, wobei das Schema (80, 90) ferner von mindestens einem eines Formats des PUCCH und einer Dauer des PUCCH abhängt.

4. Verfahren (300) nach einem der Anschlüsse 1 bis 3, wobei die Funkkommunikation mehrere Schlitze (600) in der Zeitdomäne umfasst, jeder Schlitz (600) mehrere Symbole umfasst, und wobei der lange PUCCH (640) mehr als eine Hälfte der Symbole in einem Schlitz (600) umfasst, und/oder der kurze PUCCH (630) weniger als eine Hälfte der Symbole in einem Schlitz (600) umfasst.

5. Verfahren (300) nach einem der Ansprüche 1 bis 4, wobei das Schema (80) zum Darstellen der Taktung (740) der UCI (620) auf dem kurzen PUCCH (630) mittels des Taktindikators (730) eine Taktung der UCI im gleichem Schlitz, der zum Senden der DCI (610) einschließlich des Taktindikators verwendet wird, einschließt, und/oder wobei das Schema (80) zum Darstellen der Taktung (740) der UCI (620) auf dem langen PUCCH (640) mittels des Taktindikators (730) eine Taktung der UCI (620) im gleichen Schlitz, der zum Senden der DCI (610) einschließlich des Taktindikators verwendet wird, ausschließt.

6. Verfahren (300) nach einem der Ansprüche 1 bis 5, ferner umfassend:
Senden von DCI, die den PUCCH angeben, an die Funkvorrichtung.

7. Verfahren (300) nach einem der Ansprüche 1 bis 6, wobei die Funkkommunikation eine Zeitduplex-,TDD-,Funkkommunikation umfasst, und/oder wobei das Schema ferner davon abhängt, ob die Funkkommunikation eine Halbduplex-Funkkommunikation oder eine Vollduplex-Funkkommunikation ist, und/oder wobei das Schema ferner davon abhängt, ob eine Uplink-/Downlink-Zuweisung für die Funkkommunikation zwischen dem Netzwerkknoten und der Funkvorrichtung eine semistatisch konfigurierte Uplink-/Downlink-Zuweisung ist.

8. Verfahren (300) nach einem der Ansprüche 1 bis 7, wobei die UCI eine Bestätigung für einen Prozess einer hybriden automatischen Wiederholungsanforderung, HARQ, der Funkkommunikation umfassen.

9. Verfahren (300) nach Anspruch 8, ferner umfassend oder auslösend:
Senden (304) von Daten unter Verwendung des HARQ-Prozesses an die Funkvorrichtung,
wobei die Daten optional nach dem Senden der DCI mit dem Taktindikator an die Funkvorrichtung gesendet werden.

10. Verfahren nach Anspruch 9, wobei die Daten vor dem Empfangen der UCI von der Funkvorrichtung an die Funkvorrichtung gesendet werden.

11. Verfahren (400) zur Steuerung der Taktung von Uplink-Steuerinformationen, UCI, (620) in einer Funkkommunikation (50) zwischen einem Netzwerkknoten (100; 1000) und einer Funkvorrichtung (200; 110), wobei das Verfahren von der Funkvorrichtung durchgeführt wird und umfasst oder auslöst:
Empfangen (402) von Downlink-Steuerinformationen, DCI, vom Netzwerkknoten (610), die einen Taktindikator (730) zur Taktung von Uplink-Steuerinformationen, UCI, (620) auf einem physikalischen Uplink-Steuerkanal, PUCCH, (630, 640) umfassen, vom Netzwerkknoten, wobei die Taktung (740) durch den Taktindikator (730) gemäß einem Schema (80, 90) dargestellt wird, das vom PUCCH (630, 640) abhängt, und wobei eine Größe des Taktindikators (730) innerhalb der DCI (610) vom PUCCH (630, 640) unabhängig ist, wobei das Schema (80, 90) von einer Kategorie des PUCCH abhängt, wobei die Kategorie für den PUCCH einen kurzen PUCCH (630) und einen langen PUCCH (640) umfasst, und wobei der Taktindikator (730) gemäß dem Schema unterschiedlich interpretiert wird, derart dass die mit dem Taktindikator (730) assoziierte Taktung (740) gemäß dem Schema variiert; und
Senden (406) der UCI (620) auf dem PUCCH (630, 640) gemäß der Taktung (740) an den Netzwerkknoten (100; 1000).

12. Verfahren nach Anspruch 11, ferner umfassend alle Merkmale oder Schritte, die einem der Ansprüche 2 bis 10 entsprechen.

13. Computerprogrammprodukt, umfassend Programmcodeabschnitte, die bei Ausführung auf einer oder mehreren Datenverarbeitungsvorrichtungen (1004; 1104) die eine oder die mehreren Datenverarbeitungsvorrichtungen (1004; 1104) zum Durchführen des Verfahrens nach einem der Ansprüche 1 bis 12 veranlassen, und wobei das Computerprogrammprodukt optional auf einem computerlesbaren Aufzeichnungsmedium (1006; 1106) gespeichert ist.

14. Netzwerkknoten (100) zum Steuern der Taktung von Uplink-Steuerinformationen, UCI, in einer Funkkommunikation zwischen dem Netzwerkknoten (100) und einer Funkvorrichtung (200), wobei der Netzwerkknoten (100) so konfiguriert ist, dass er die folgenden Schritte ausführt oder auslöst:
Senden von Downlink-Steuerinformationen, DCI, (610), die einen Taktindikator (730) zur Taktung von Uplink-Steuerinformationen, UCI, (620) auf einem physikalischen Uplink-Steuerkanal, PUCCH, (630, 640) umfassen, an die Funkvorrichtung (200), wobei die Taktung (740) durch den Taktindikator (730) gemäß einem Schema (80, 90) dargestellt wird, das vom PUCCH (630, 640) abhängt, und wobei eine Größe des Taktindikators (730) innerhalb der DCI (610) vom PUCCH (630, 640) unabhängig ist, wobei das Schema (80, 90) von einer Kategorie des PUCCH abhängt, wobei die Kategorie für den PUCCH einen kurzen PUCCH (630) und einen langen PUCCH (640) umfasst, und wobei der Taktindikator (730) gemäß dem Schema unterschiedlich interpretiert wird, derart dass die mit dem Taktindikator (730) assoziierte Taktung (740) gemäß dem Schema variiert; und
Empfangen der UCI (620) auf dem PUCCH (630, 640) gemäß der Taktung (740) von der Funkvorrichtung (200).

15. Netzwerkknoten (100) nach Anspruch 14, der ferner zum Ausführen der Schritte nach einem der Ansprüche 2 bis 10 konfiguriert ist.

16. Funkvorrichtung (200) zum Steuern der Taktung von Uplink-Steuerinformationen, UCI, in einer Funkkommunikation zwischen einem Netzwerkknoten (200) und der Funkvorrichtung (200), wobei die Funkvorrichtung (100) so konfiguriert ist, dass sie die folgenden Schritte ausführt oder auslöst:
Empfangen von Downlink-Steuerinformationen, DCI, (610), die einen Taktindikator (730) zur Taktung von Uplink-Steuerinformationen, UCI, (620) auf einem physikalischen Uplink-Steuerkanal, PUCCH, (630, 640) umfassen, vom Netzwerkknoten (100), wobei die Taktung (740) durch den Taktindikator (730) gemäß einem Schema (80, 90) dargestellt wird, das vom PUCCH (630, 640) abhängt, und wobei eine Größe des Taktindikators (730) innerhalb der DCI (610) vom PUCCH (630, 640) unabhängig ist, wobei das Schema (80, 90) von einer Kategorie des PUCCH abhängt, wobei die Kategorie für den PUCCH einen kurzen PUCCH (630) und einen langen PUCCH (640) umfasst, und wobei der Taktindikator (730) gemäß dem Schema unterschiedlich interpretiert wird, derart dass die mit dem Taktindikator (730) assoziierte Taktung (740) gemäß dem Schema variiert; und
Senden der UCI (620) auf dem PUCCH (630, 640) gemäß der Taktung (740) an den Netzwerkknoten (100).

17. Funkvorrichtung (200) nach Anspruch 16, die ferner zum Ausführen der Schritte nach einem der Ansprüche 2 bis 10 konfiguriert ist.

## Revendications

1. Procédé (300) de commande de la synchronisation d'informations de commande de liaison montante, UCI, dans une communication radio (50) entre un nœud de réseau (100 ; 1000) et un dispositif radio (200 ; 1100), le procédé étant réalisé par le nœud de réseau et comprenant ou déclenchant :
l'envoi (302), au dispositif radio, d'informations de commande de liaison descendante, DCI, (610) incluant un indicateur de synchronisation (730) pour synchroniser des informations de commande de liaison montante, UCI, (620) sur un canal de commande de liaison montante physique, PUCCH, (630, 640), dans lequel la synchronisation (740) est représentée par l'indicateur de synchronisation (730) selon un schéma (80, 90) qui dépend du PUCCH (630, 640), et dans lequel une taille de l'indicateur de synchronisation (730) à l'intérieur des DCI (610) est indépendante du PUCCH (630, 640), dans lequel le schéma (80, 90) dépend d'une catégorie du PUCCH, dans lequel la catégorie du PUCCH inclut un PUCCH court (630) et un PUCCH long (640), et dans lequel l'indicateur de synchronisation (730) est interprété différemment en fonction du schéma de sorte que la synchronisation (740) associée à l'indicateur de synchronisation (730) varie en fonction du schéma ; et la réception (306), depuis le dispositif radio (200 ; 1100), des UCI (620) sur le PUCCH (630, 640) en fonction de la synchronisation (740).

2. Procédé (300) selon la revendication 1, dans lequel la taille de l'indicateur de synchronisation à l'intérieur des DCI (610) est indépendante du schéma (80, 90), et/ou dans lequel une position de l'indicateur de synchronisation à l'intérieur des DCI (610) est indépendante d'au moins l'un parmi le PUCCH (630, 640) et le schéma (80, 90).

3. Procédé (300) selon la revendication 1 ou 2, dans lequel le schéma (80, 90) dépend en outre d'au moins l'un parmi un format du PUCCH et une durée du PUCCH.

4. Procédé (300) selon l'une quelconque des revendications 1 à 3, dans lequel la communication radio comprend de multiples créneaux (600) dans le domaine de temps, chaque créneau (600) comprenant de multiples symboles, et dans lequel le PUCCH long (640) englobe plus de la moitié des symboles dans un créneau (600), et/ou le PUCCH court (630) englobe moins de la moitié des symboles dans un créneau (600).

5. Procédé (300) selon l'une quelconque des revendications 1 à 4, dans lequel le schéma (80) pour représenter, au moyen de l'indicateur de synchronisation (730), la synchronisation (740) des UCI (620) sur le PUCCH court (630) inclut la synchronisation des UCI dans le même créneau que celui utilisé pour l'envoi des DCI (610) incluant l'indicateur de synchronisation, et/ou dans lequel le schéma (80) pour représenter, au moyen de l'indicateur de synchronisation (730), la synchronisation (740) des UCI (620) sur le PUCCH long (640) exclut la synchronisation des UCI (620) dans le même créneau que celui utilisé pour l'envoi des DCI (610) incluant l'indicateur de synchronisation.

6. Procédé (300) selon l'une quelconque des revendications 1 à 5, comprenant en outre :
l'envoi, au dispositif radio, de DCI indicatives du PUCCH.

7. Procédé (300) selon l'une quelconque des revendications 1 à 6, dans lequel la communication radio inclut une communication radio à duplexage par répartition dans le temps, TDD, et/ou dans lequel le schéma dépend en outre de si la communication radio est une communication radio en semi-duplex ou une communication radio en duplex complet, et/ou dans lequel le schéma dépend en outre de si une allocation de liaison montante/liaison descendante pour la communication radio entre le nœud de réseau et le dispositif radio est une allocation de liaison montante/liaison descendante à configuration semi-statique.

8. Procédé (300) selon l'une quelconque des revendications 1 à 7, dans lequel les UCI incluent un accusé de réception pour un processus de demande de répétition automatique hybride, HARQ, de la communication radio.

9. Procédé (300) selon la revendication 8, en outre comprenant ou déclenchant :
l'envoi (304) de données au dispositif radio en utilisant le processus HARQ, facultativement dans lequel les données sont envoyées au dispositif radio après l'envoi des DCI comprenant l'indicateur de synchronisation.

10. Procédé selon la revendication 9, dans lequel les données sont envoyées au dispositif radio avant la réception des UCI depuis le dispositif radio.

11. Procédé (400) de commande de la synchronisation d'informations de commande de liaison montante, UCI, (620) dans une communication radio (50) entre un nœud de réseau (100 ; 1000) et un dispositif radio (200 ; 1100), le procédé étant réalisé par le dispositif radio et comprenant ou déclenchant :
la réception (402), depuis le nœud de réseau, d'informations de commande de liaison descendante, DCI, (610) incluant un indicateur de synchronisation (730) pour synchroniser des informations de commande de liaison montante, UCI, (620) sur un canal de commande de liaison montante physique, PUCCH, (630, 640), dans lequel la synchronisation (740) est représentée par l'indicateur de synchronisation (730) selon un schéma (80, 90) qui dépend du PUCCH (630, 640), et dans lequel une taille de l'indicateur de synchronisation (730) à l'intérieur des DCI (610) est indépendante du PUCCH (630, 640), dans lequel le schéma (80, 90) dépend d'une catégorie du PUCCH, dans lequel la catégorie du PUCCH inclut un PUCCH court (630) et un PUCCH long (640), et dans lequel l'indicateur de synchronisation (730) est interprété différemment en fonction du schéma de sorte que la synchronisation (740) associée à l'indicateur de synchronisation (730) varie en fonction du schéma ; et l'envoi (406), au nœud de réseau (100 ; 1000), des UCI (620) sur le PUCCH (630, 640) en fonction de la synchronisation (740).

12. Procédé selon la revendication 11, comprenant en outre toute caractéristique ou étape correspondant à l'une quelconque des revendications 2 à 10.

13. Produit de programme informatique comprenant des portions de code de programme qui, lorsqu'elles sont exécutées sur un ou plusieurs dispositifs informatiques (1004 ; 1104), amènent les un ou plusieurs dispositifs informatiques (1004 ; 1104) à réaliser le procédé selon l'une quelconque des revendications 1 à 12 ; et facultativement le produit de programme informatique est stocké sur un support d'enregistrement lisible par ordinateur (1006 ; 1106).

14. Nœud de réseau (100) pour commander la synchronisation d'informations de commande de liaison montante, UCI, dans une communication radio entre le nœud de réseau (100) et un dispositif radio (200), le nœud de réseau (100) étant configuré pour réaliser ou déclencher les étapes suivantes :
l'envoi, au dispositif radio (200), d'informations de commande de liaison descendante, DCI, (610) incluant un indicateur de synchronisation (730) pour synchroniser des informations de commande de liaison montante, UCI, (620) sur un canal de commande de liaison montante physique, PUCCH, (630, 640), dans lequel la synchronisation (740) est représentée par l'indicateur de synchronisation (730) selon un schéma (80, 90) qui dépend du PUCCH (630, 640), et dans lequel une taille de l'indicateur de synchronisation (730) à l'intérieur des DCI (610) est indépendante du PUCCH (630, 640), dans lequel le schéma (80, 90) dépend d'une catégorie du PUCCH, dans lequel la catégorie du PUCCH inclut un PUCCH court (630) et un PUCCH long (640), et dans lequel l'indicateur de synchronisation (730) est interprété différemment en fonction du schéma de sorte que la synchronisation (740) associée à l'indicateur de synchronisation (730) varie en fonction du schéma ; et la réception, depuis le dispositif radio (200), des UCI (620) sur le PUCCH (630, 640) en fonction de la synchronisation (740).

15. Nœud de réseau (100) selon la revendication 14, configuré en outre pour réaliser les étapes selon l'une quelconque des revendications 2 à 10.

16. Dispositif radio (200) pour commander la synchronisation d'informations de commande de liaison montante, UCI, dans une communication radio entre un nœud de réseau (100) et le dispositif radio (200), le dispositif radio (200) étant configuré pour réaliser ou déclencher les étapes suivantes :
la réception, depuis le nœud de réseau (100), d'informations de commande de liaison descendante, DCI, (610) incluant un indicateur de synchronisation (730) pour synchroniser des informations de commande de liaison montante, UCI, (620) sur un canal de commande de liaison montante physique, PUCCH, (630, 640), dans lequel la synchronisation (740) est représentée par l'indicateur de synchronisation (730) selon un schéma (80, 90) qui dépend du PUCCH (630, 640), et dans lequel une taille de l'indicateur de synchronisation (730) à l'intérieur des DCI (610) est indépendante du PUCCH (630, 640), dans lequel le schéma (80, 90) dépend d'une catégorie du PUCCH, dans lequel la catégorie du PUCCH inclut un PUCCH court (630) et un PUCCH long (640), et dans lequel l'indicateur de synchronisation (730) est interprété différemment en fonction du schéma de sorte que la synchronisation (740) associée à l'indicateur de synchronisation (730) varie en fonction du schéma ; et l'envoi, au nœud de réseau (100), des UCI (620) sur le PUCCH (630, 640) en fonction de la synchronisation (740) .

17. Dispositif radio (200) selon la revendication 16, configuré en outre pour réaliser les étapes correspondant à l'une quelconque des revendications 2 à 10.
